# EUROPEAN PATENT SPECIFICATION

(11) **EP 2 988 888 B1**
(45) Date of publication and mention of the grant of the patent: **01.11.2017**
(21) Application number: 14787566.0
(22) Date of filing: 25.04.2014
(51) Int. Cl.: B22F 3/10, B29C 67/00, B33Y 10/00

(54) **LOCAL CONTAMINATION DETECTION IN ADDITIVE MANUFACTURING**
LOKALE ERKENNUNG VON KONTAMINATIONEN IN EINER ZUSATZSTOFFHERSTELLUNG
DÉTECTION D'UNE CONTAMINATION LOCALE DANS UNE FABRICATION ADDITIVE

(30) Priority: 26.04.2013 US 201361816490 P
(43) Date of publication of application: 02.03.2016
(73) Proprietor: United Technologies Corporation, Farmington, CT 06032 (US)
(72) Inventor: MIRONETS, Sergey, Charlotte, North Carolina 28202 (US); TWELVES, Wendell, V., Jr., Glastonbury, Connecticut 06033 (US); KLUCHA, Agnes, Colchester, Connecticut 06415 (US); DAUTOVA, Lyutsia, Rocky Hill, Connecticut 06067 (US)
(74) Representative: Hull, James Edward
(86) International application number: PCT/US2014/035516
(87) International publication number: WO 2014/176538

(56) References cited:
- EP-A1- 2 730 353
- JP-A- 2009 007 669
- KR-A- 20060 042 741
- US-A1- 2012 139 166
- US-A1- 2012 139 166
- US-B1- 8 378 293
- US-B2- 6 757 061

## Description

### BACKGROUND

The described subject matter relates generally to the field of additive manufacturing. More particularly, the subject matter relates to detecting contamination in an additive manufacturing environment.

Additive manufacturing refers to a category of manufacturing methods characterized by the fact that the finished part is created by layer-wise construction of a plurality of thin sheets of material. Additive manufacturing may involve applying liquid or powder material to a workstage, then doing some combination of sintering, curing, melting, and/or cutting to create a layer. The process is repeated up to several thousand times to construct the desired finished component or article.

Various types of additive manufacturing are known. Examples include stereo lithography (additively manufacturing objects from layers of a cured photosensitive liquid), electron beam melting (using a powder as feedstock and selectively melting the powder using an electron beam), laser additive manufacturing (using a powder as a feedstock and selectively melting the powder using a laser), and laser object manufacturing (applying thin solid sheets of material over a workstage and using a laser to cut away unwanted portions).

Additive manufacturing processes typically require managed environments to protect the product from deterioration or contamination. Inert or otherwise unreactive gas flow atmospheres are typical. Despite this, raw materials can become contaminated, causing defects in the built components. However, due to limitations of current machines and processes, the type and degree of raw material contamination is not known until the build process is complete.

US 2012/0139166 relates to a method and apparatus for making a three-dimensional object.

### SUMMARY

The invention is defined by an additive manufacturing system in accordance with claim 1 and by a method of manufacturing in accordance with claim 10.

### BRIEF DESCRIPTION OF THE DRAWINGS

FIG. 1 schematically depicts an additive manufacturing apparatus.
FIG. 2 shows an example working chamber and gas analyzer for the additive manufacturing apparatus of FIG. 1.
FIG. 3 shows an example additive manufacturing system with a plurality of devices and contamination detection systems.

### DETAILED DESCRIPTION

An additive manufacturing system includes a build chamber, a powder bed deposition apparatus, and a broad spectrum gas analyzer or sensor which can be tailored to the type of deposition apparatus.

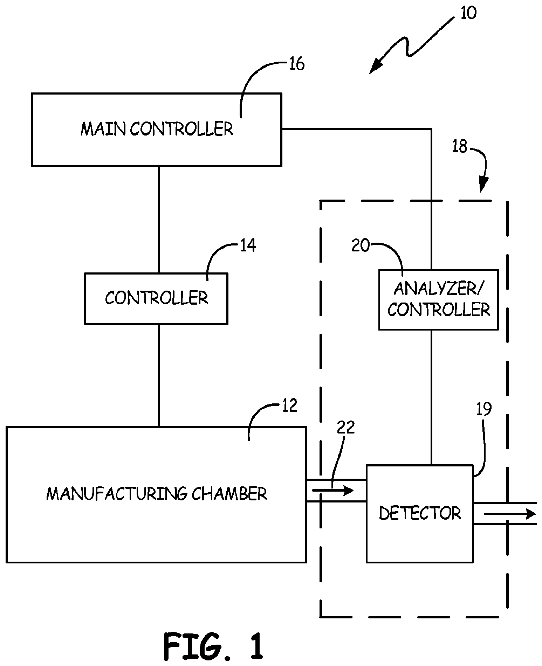

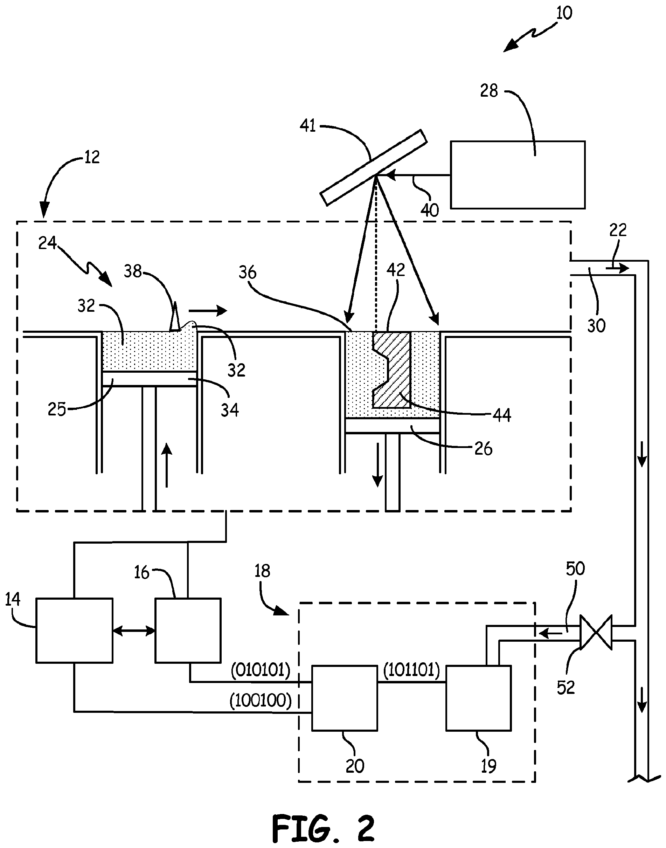

FIG. 1 is a schematic of an example additive manufacturing system 10 with build chamber 12. Build chamber 12 contains one or more devices that are capable of producing solid freeform objects by additive manufacturing. Non-limiting embodiments of such devices include those which fabricate objects by direct laser sintering (DLS) manufacturing, direct laser melting (DLM) manufacturing, selective laser sintering (SLS) manufacturing, selective laser melting (SLM) manufacturing, laser engineering net shaping (LENS) manufacturing, electron beam melting (EBM) manufacturing, direct metal deposition (DMD) manufacturing, and others known in the art. One non-limiting example of a suitable device is shown in more detail in FIG. 2.

In the example shown, main controller 14 can cooperate with and/or manage one or more individual controllers. Manufacturing controller 16 may allow fully automatic, semi-automatic, or manual control of additive manufacturing devices in manufacturing chamber 12.

Additive manufacturing system 10 can also include contamination detection system 18 in communication with build chamber 12. Contamination detection system 18 includes contamination detector 19 and analyzer/controller 20. Contamination analyzer/ controller 20 can be a separate controller, or one or more functions of analyzer/controller 20 can be incorporated into main controller 14 and/or manufacturing controller 16. Alternatively, one or more functions of analyzer/controller 20 can be incorporated into an environmental controller (not shown) used to manage the environment in build chamber 12. In certain embodiments, a protective inert partial pressure atmosphere, or vacuum atmosphere may be required in build chamber 12 to produce flaw free solid freeform objects having structural integrity, dimensional accuracy, and surface finish.

Contamination detection system 18 can operate and provide relevant contamination information effectively in real time. For example, contamination detector 19 can periodically receive samples of gases 22 during a build process. These gases can include byproducts generated during operation of one or more powder bed build devices 24 disposed in build chamber 12. Generally, positive pressure exhaust gases 22 or other build process byproducts are discharged from build chamber 12. Detector 19 samples gases 22 and communicates corresponding signals to analyzer/controller 20. In certain embodiments, detector 19 comprises at least one mass spectral gas detector capable of detecting at least one of a plurality of gases indicative of powder contamination in build chamber 12. Analyzer/controller 20 receives one or more resulting powder contamination signals generated by detector(s) 19. Analyzer/controller 20 then evaluates the resulting powder contamination signals to identify constituent components of gases 22, including those indicative of powder contamination.

Analyzer/controller 20 can also analyze and compile data reflecting one or more aspects of identified powder contamination. These can include, for example, gas composition, contaminant composition, peak magnitude of contamination, and cumulative magnitude of contamination. Relevant contaminant data from analyzer/controller 20 can be shared with main controller 14 and/or manufacturing controller 16. In combination with deposition location data from controllers 14 and/or 16, contaminant data can be used to evaluate the expected quality of the finished object during the build process effectively in real time. Thus in some cases, the data is evaluated and a determination of quality can be made before a build process is fully completed. This reduces wasted processing time and excess scrap caused by the building of solid freeform objects with unrepairable defects that are not detected until the component can be removed from build chamber 12.

FIG. 2 shows a detailed example of a powder-bed build device 24 disposed in build chamber 12 and in communication with contamination detection system 18. A non-limiting example embodiment includes SLS device 24 housed in build chamber 12, comprises powder storage chamber 25, build platform 26, energy beam apparatus 28, and exhaust 30. During operation of SLS device 24, raw material powder 32 is fed upward by piston 34 and is spread over build surface 36 by roller or recoater blade 38. After powder 32 is spread onto build surface 36, energy beam generator 26 is activated to direct a laser or electron beam 40. Beam 40 can be steered using a number of different apparatus, such as but not limited to mirror 41, so as to sinter selective areas of powder 32. The sintered powder forms a single build layer 42 of solid object 44 adhered to the underlying platform (or a preceding build layer) according to a computer model of object 44 stored in an STL memory file. Roller or recoater 38 is returned to a starting position, piston 34 advances to expose another layer of powder, and build platform 26 indexes down by one layer thickness and the process repeats for each successive build surface 36 until solid freeform object 44 is completed. SLS device 24 is only one example of solid freeform manufacturing apparatus and is not meant to limit the invention to any single machine known in the art.

To test for powder contamination in real time, additive manufacturing system 10 also includes sample port 50 connected to a build chamber (e.g., build chamber 12). Sample port 50 can be connected to an exhaust port or exhaust line, or to a part of the environmental control system (not shown). Build chamber 12 can then be selectively placed into communication with contamination detection system 18, such as by a solenoid operated valve 52. Contamination detector(s) 19 then provide signals to contamination analyzer/ controller 20 as noted above. Contamination analyzer/controller 20, which can be a broad spectrum, software-based residual gas analyzer, can be customized to identify and analyze particular signals indicative of powder contamination in build chamber 12. Example compounds indicative of powder contamination include, but are not limited to, carbonaceous gases, nitrogen, hydrogen, and combinations thereof. Alternatively, several suitable commercially available gas analyzer packages are available from vendors, such as Inficon, Inc. of East Syracuse, New York, U.S.A., and Hiden Analytical, Inc. of Livonia, Michigan, U.S.A. These and other commercially available software modules can also be adapted to measure, record, and report the relevant data.

With sample port 50 providing communication between chamber 12 and contamination detection system 18, localized powder contamination can be detected *in situ.* Current powder bed manufacturing systems are not able to test for powder contamination during the build process. While some systems include a general oxygen sensor to detect infiltration of atmospheric oxygen into the chamber, an oxygen sensor cannot detect other gases indicative of powder contamination that could cause defects in the freeform object. Testing bulk powder before it is placed in the feed chamber or platform does not account for bad sampling techniques, nor is there any way to identify powder contamination occurring between the time of bulk sampling and powder deposition. In some instances, sacrificial test bars can be built up on the same build plate as the freeform object, and then examined for signs of contamination. However, test bars require that the build process be completed before contamination can be detected. Neither oxygen sensors nor test bars are able to determine quantity, type, and location of localized powder contamination during a build.

Manufacturing controller 16, adapted to operate powder bed additive manufacturing device 24, and contaminant controller/analyzer 20, adapted to operate contamination detection system 18 cooperate to identify the location and extent of powder contamination in the object as it is being built. This allows repairability of the object to be evaluated throughout the build process. This can be done in addition to existing bulk powder quality controls performed prior to feeding powder 32 into the additive manufacturing device (e.g., powder storage chamber 25 of powder bed build device 24).

When one or more gases indicative of contamination are detected, an approximate or exact location of the defect on object 44 can be determined by correlating the timing of detection to the most recent position(s) of the energy beam and the stage of the build platform. Severity of powder contamination can also be determined by the duration and/or peak levels of the relevant signals sent to contaminant controller/analyzer 20.

In one example, when contamination is detected, XY location data of the energy beam can be determined from manufacturing controller 14 and/or main controller 16. Z position data can be determined from the relative height of build platform 26. Data from contaminant analyzer/controller 20 is combined with positional coordinate data to record and/or communicate details of a potential defect in object 44 for later resolution.

Any of controllers 14, 16, 20 can also be configured to record and analyze cumulative and peak contamination data, and compare that data to various thresholds. Since different gases may be indicative of different combinations of contaminants and raw materials, and since each potential contaminant can have varying effects on the finished object 44, controllers 14, 16, 20 can also be configured to treat the detected gases differently.

Information about potential contamination locations and one or more aspects of the powder contamination can be combined to evaluate repairability, either alone or in aggregate. The evaluation can be made in different ways. In one example, an overall determination is made on whether the type and extent of contamination make the part (a) usable; (b) repairable; or (c) unrepairable. Additionally or alternatively, the evaluation can be made using a numeric scale (e.g., 1-10 or 1-100), with specified ranges of the scale corresponding to various real-time evaluations of part quality and/or repairability. In response to an evaluation of unrepairability, the build process can be terminated prior to completion. When an unrepairability determination can be made before the build process is complete, this saves processing time, effort, and reduces scrap.

For each potential contaminant, there may be multiple instantaneous, peak, and/or cumulative thresholds which will trigger a corresponding response by additive manufacturing system 10. For example, a first contaminant such as hydrogen may be detected in minimal quantities. Breaching a first instantaneous contaminant threshold during the build process may be indicative of small localized areas of contamination. Isolated events of this contamination may be deemed insignificant by the system and a response may be deferred until more contamination is detected. The first contaminant may periodically exceed a second higher instantaneous threshold for less than a maximum time duration. In certain instances, the object may be deemed damaged but repairable, barring the finding of further moderate defects by contamination detection system 18. In certain embodiments, the build process can be interrupted to perform a suitable repair process, if applicable. The repair process can include operating energy beam 26 or a separate subtractive device (not shown) in such a way so as to burn off or otherwise remove the potentially contaminated region. The build process can then be repeated in the repaired area before resuming the standard build. Alternatively, one or more contamination locations can be mapped (e.g., by saving contamination coordinates and other details in a data file) for later inspection, evaluation, and localized repairs.

In certain embodiments, real-time results of contamination detected by system 18 will exceed a cumulative level, or will exceed a peak threshold level, duration, or combination thereof during the build process. In such instances, the object can be deemed unrepairable, and any of controllers 14, 16, 20 can then terminate the build process. Unlike the use of test bars, this arrangement allows a build process subject to powder contamination to be abandoned before running to completion, thereby saving efforts in processing effort, time, materials, and scrap. Such an arrangement is useful in a high level testing or production environment.

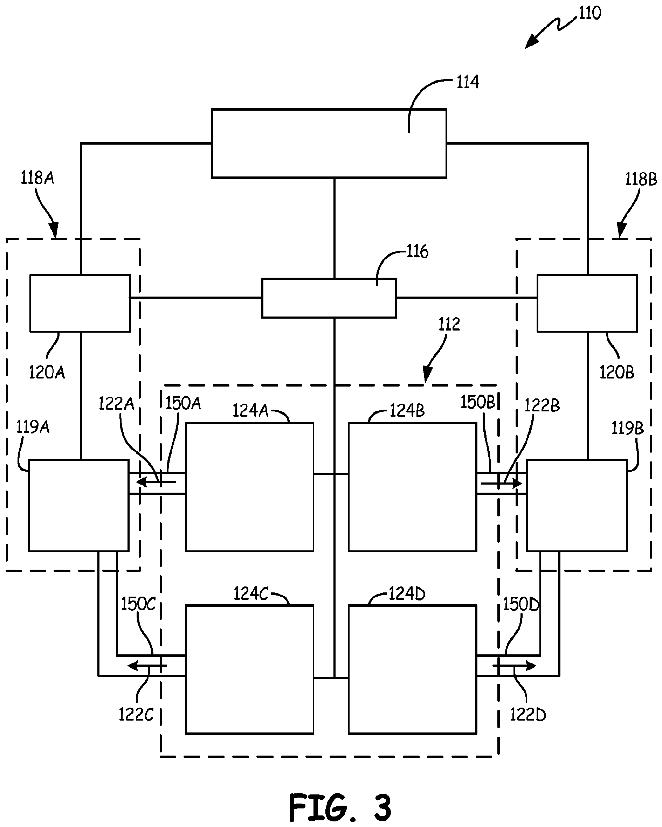

FIG. 3 shows an example additive manufacturing system 110 suitable for scaling into pilot or production environments. Build chamber 112 contains multiple powder bed build devices 124A, 124B, 124C, 124D, each capable of producing solid freeform objects by additive manufacturing as described with respect to FIGS. 1 and 2. In the example of FIG. 3, main controller 114 can communicate with and/or manage one or more manufacturing controllers 116, each of which can allow fully automatic, semi-automatic, or manual control of additive manufacturing devices 124A-124D in build chamber 112.

Additive manufacturing system 110 can also include one or more contamination detection systems 118A, 118B. Similar to FIGS. 1 and 2, each contamination detection system 118A, 118B can include contamination detector 119 and analyzer/ controller 120 which cooperate with main controller 114 and/or manufacturing controllers 116A, 116B to detect contamination during operation of one or more powder bed build devices 124A-124D.

As shown in FIG. 3, there are four powder bed build devices 124A-124D. Each contamination analyzer/controller 120 can be a separate controller, or can be incorporated into main controller 114. Alternatively, analyzer/controller 120 can be incorporated into an environmental controller (not shown) used to manage the environment in build chambers 112.

Contamination detectors 119A, 119B can receive atmospheric gases and byproducts from operation of each powder bed build device 124A-124D. Detectors 119A, 119B, arranged in series or parallel, selectively receive sampled exhaust gases 122A-122D and each then communicate corresponding data signals to respective analyzer/controllers 120A, 120B. For simplicity of illustration, individual sample ports 150A-150D are shown leading directly to contamination detectors 119A, 119B, while corresponding exhaust lines, sample port valves, and other ancillary elements have been omitted.

Similar to FIGS. 1 and 2, signals from contamination detectors 119A, 119B can be evaluated by one or both analyzers/controllers 120A, 120B. Data collected or created by analyzers/controllers 120A, 120B can include the types and concentrations of contaminant gases found. Contaminant data can then be communicated to main controller 114 and/or manufacturing controller 116 along with positional data corresponding to the build position at the time contamination was detected by system(s) 118A, 118B. The contaminant data can be combined with positional coordinates for the respective powder bed build device 124A-124D experiencing contamination. In combination with deposition location data from controllers 114 and/or 116, contaminant data can be used to make a determination of the expected quality of the finished part. In some cases, a determination is made before each build process is fully completed.

In FIG. 3, powder bed build devices 124A-124D are shown in a single build chamber 112, while each contamination detection system 118A, 118B is shown in a separate location. In alternative embodiments, powder bed build devices can be disposed in individual build chambers, or there may be a number of powder bed build devices different from four in each build chambers 112, as required by design. While only two contamination detection systems 118A, 118B are shown, others may be added or subtracted as necessary.

## Claims

1. An additive manufacturing system (10) comprising:
a build chamber (12);
a powder bed additive manufacturing device (24) disposed in the build chamber; and
a powder contamination detection system (18) in communication with an atmosphere in the build chamber; and **characterized by**
a manufacturing controller (16) adapted to operate the powder bed additive manufacturing device during a build process, wherein, upon detection of powder contamination by the powder contamination detection system, the manufacturing controller is adapted to provide spatial coordinates of a build location targeted by the powder bed additive manufacturing device, the spatial coordinates corresponding to a potential contamination location, wherein the potential contamination location and the one or more aspects of the powder contamination are combined in real time to evaluate repairability of an object being formed in the build chamber during the build process.

2. The additive manufacturing system of claim 1, wherein the build chamber (12) is maintained under vacuum or an inert partial pressure atmosphere.

3. The additive manufacturing system of claim 1 or 2, wherein the powder contamination detection system comprises:
at least one mass spectral gas detector (19) capable of detecting at least one of a plurality of gases indicative of powder contamination in the build chamber, optionally selected from a group consisting of: hydrogen, nitrogen, carbonaceous gases, and combinations thereof, wherein optionally the at least one mass spectral gas detector produces at least one resulting powder contamination signal in response to detecting the at least one gas indicative of powder contamination in the build chamber (12), wherein optionally the powder contamination detection system (18) further comprises:
an analyzer/controller module (20) including broad spectrum gas analyzer software adapted to process the at least one powder contamination signal to identify one or more aspects of the powder contamination in the build chamber, wherein the one or more identified aspects are selected from a group consisting of: gas composition, contaminant composition, peak magnitude of contamination, and cumulative magnitude of contamination.

4. The additive manufacturing system of any preceding claim, wherein the powder bed additive manufacturing apparatus is selected from a group consisting of:
a direct laser sintering apparatus;
a direct laser melting apparatus;
a selective laser sintering apparatus;
a selective laser melting apparatus;
a laser engineered net shaping apparatus;
an electron beam melting apparatus; and
a direct metal deposition apparatus.

5. The additive manufacturing system of claim 1 wherein the powder bed additive manufacturing device includes:
a plurality of powder bed additive manufacturing devices (124A, 124B, 124C, 124D) disposed in at least one build chamber (112); said system further comprising:
a plurality of sample ports (150A, 150B, 150C, 150D) connected to the at least one build chamber, each sample port separately in communication with a protective atmosphere proximate each of the plurality of powder bed additive manufacturing devices; and
a real-time powder contamination detection system (118) in communication with the plurality of sample ports.

6. The additive manufacturing system of claim 5, further comprising:
a manufacturing controller (116A, 116B) adapted to operate at least one of the plurality of powder bed additive manufacturing (124A, 124B, 124C, 124D) during a build process, the manufacturing controller adapted to provide spatial coordinates of a build location targeted by the at least one powder bed additive manufacturing device.

7. The additive manufacturing system of claim 5 or 6, wherein the powder contamination detection system (118A, 118B) comprises:
a first mass spectral gas detector (119A, 119B) in selective communication with at least one of the sample ports (150A, 150B, 150C, 150D), the first mass spectral gas detector capable of detecting at least one of a plurality of gases indicative of powder contamination in at least one of the plurality of powder bed additive manufacturing devices (124A, 124B, 124C, 124D); and
an analyzer/controller module (120A, 120B) including broad spectrum gas analyzer software, wherein the powder contamination detection system (118A, 118B) optionally comprises:
a second mass spectral gas detector (119A, 119B) in selective communication with at least one of the sample ports, the second mass spectral gas detector capable of detecting at least one of a plurality of gases indicative of powder contamination in at least one of the plurality of powder bed additive manufacturing devices.

8. The additive manufacturing system of claim 7, wherein the analyzer/controller module (120A, 120B) is adapted to receive at least one powder contamination signal from the first mass spectral gas detector (119A, 119B) in response to detecting the at least one gas indicative of powder contamination in the at least one powder bed additive manufacturing device (124A, 124B, 124C, 124D), wherein the analyzer/controller module is adapted to process the at least one powder contamination signal to identify one or more aspects of powder contamination, the one or more aspects selected from a group consisting of: gas composition, contaminant composition, peak magnitude of contamination, and cumulative magnitude of contamination, wherein a potential contamination location and the one or more aspects of the powder contamination are combined to evaluate repairability of an object during the build process.

9. The additive manufacturing system of claim 7, wherein the at least one gas indicative of powder contamination in the build chamber (112) is selected from a group consisting of: hydrogen, nitrogen, carbonaceous gases, and combinations thereof.

10. A method of manufacturing a solid freeform object, the method comprising:
operating a first powder bed additive manufacturing device (24) disposed in a build chamber (12);
generating a first set of byproducts from operation of the first powder bed additive manufacturing device (24); communicating at least one of the first set of byproducts to a powder bed contamination detection system (18);
operating the powder bed contamination detection system (18) to detect contamination of powder used in the first powder bed additive manufacturing device during the step of operating the first powder bed additive manufacturing device; **characterized by** upon detection of powder contamination in the build chamber (12), recording spatial coordinates of a build location targeted by the at least one powder bed additive manufacturing device, the recorded spatial coordinates corresponding to a potential contamination location.

11. The method of claim 10, wherein the step of operating the powder bed contamination detection system (18) comprises:
detecting at least one gas indicative of powder contamination in the build chamber (12); producing at least one resulting powder contamination signal in response to detecting the at least one gas; and
processing the at least one powder contamination signal to identify one or more aspects of the powder contamination in the build chamber.

12. The method of claim 11, wherein:
the one or more identified aspects are selected from a group consisting of: gas composition, contaminant composition, peak magnitude of contamination, and cumulative magnitude of contamination; and/or
the at least one gas indicative of powder contamination in the build chamber (12) is selected from a group consisting of: hydrogen, nitrogen, carbonaceous gases, and combinations thereof.

13. The method of claim 10, further comprising:
evaluating repairability of an object during the build process based on a potential contamination location and one or more aspects of powder contamination; and, optionally
in response to a real-time evaluation of unrepairability, terminating the build process prior to completion.

## Patentansprüche

1. Zusatzstoffherstellungssystem (10), umfassend:
eine Aufbaukammer (12);
eine Pulverbett-Zusatzstoffherstellungsvorrichtung (24), die in der Aufbaukammer angeordnet ist; und
ein Pulverkontaminationserkennungssystem (18), das mit einer Atmosphäre in der Aufbaukammer in Verbindung steht; und **gekennzeichnet durch**
eine Herstellungssteuerung (16), die angepasst ist, um die Pulverbett-Zusatzstoffherstellungsvorrichtung während eines Aufbauverfahrens zu betreiben, wobei die Herstellungssteuerung bei Erkennung von Pulverkontaminationen durch das Pulverkontaminationserkennungssystem angepasst ist, um Raumkoordinaten eines Aufbauorts bereitzustellen, auf den durch die Pulverbett-Zusatzstoffherstellungsvorrichtung abgezielt wird, wobei die Raumkoordinaten einem möglichen Kontaminationsort entsprechen, wobei der mögliche Kontaminationsort und der eine oder die mehreren Aspekte von Pulverkontaminationen in Echtzeit kombiniert werden, um eine Reparierbarkeit eines Gegenstands zu beurteilen, der während des Aufbauverfahrens in der Aufbaukammer gebildet wird.

2. Zusatzstoffherstellungssystem nach Anspruch 1, wobei die Aufbaukammer (12) unter Vakuum oder einer Atmosphäre mit inertem Partialdruck gehalten wird.

3. Zusatzstoffherstellungssystem nach Anspruch 1 oder 2, wobei das Pulverkontaminationserkennungssystem Folgendes umfasst:
zumindest einen Massenspektralgasdetektor (19), der in der Lage ist, zumindest eines von einer Vielzahl von Gasen zu erkennen, die Pulverkontaminationen in der Aufbaukammer anzeigen, das gegebenenfalls aus einer Gruppe ausgewählt ist, die aus Folgendem besteht: Wasserstoff, Stickstoff, kohlenstoffhaltige Gase und Kombinationen davon, wobei der zumindest eine Massenspektralgasdetektor gegebenenfalls zumindest ein resultierendes Pulverkontaminationssignal als Reaktion auf das Erkennen des zumindest einen Gases erzeugt, das Pulverkontaminationen in der Aufbaukammer (12) anzeigt, wobei das Pulverkontaminationserkennungssystem (18) gegebenenfalls ferner Folgendes umfasst:
ein Analysator-/Steuermodul (20), das eine Breitband-Gasanalysatorsoftware beinhaltet, die angepasst ist, um zumindest ein Pulverkontaminationssignal zu verarbeiten, um einen oder mehrere Aspekte von Pulverkontaminationen in der Aufbaukammer zu identifizieren, wobei der eine oder die mehreren identifizierten Aspekte aus einer Gruppe ausgewählt sind, die aus Folgendem besteht: Gaszusammensetzung, Kontaminationszusammensetzung, Kontaminationsspitzengröße und kumulative Kontaminationsgröße.

4. Zusatzstoffherstellungssystem nach einem der vorhergehenden Ansprüche, wobei das Pulverbett-Zusatzstoffherstellungsgerät aus einer Gruppe ausgewählt ist, die aus Folgendem besteht:
einem Gerät zum direkten Lasersintern;
einem Gerät zum direkten Laserschmelzen;
einem Gerät zum selektiven Lasersintern;
einem Gerät zum selektiven Laserschmelzen:
einem laserbetriebenen Netzformungsgerät;
einem Elektronenstrahlschmelzgerät; und
einem Gerät zur direkten Metallabscheidung.

5. Zusatzstoffherstellungssystem nach Anspruch 1, wobei die Pulverbett-Zusatzstoffherstellungsvorrichtung Folgendes beinhaltet:
eine Vielzahl von Pulverbett-Zusatzstoffherstellungsvorrichtungen (124A, 124B, 124C, 124D), die in zumindest einer Aufbaukammer (112) angeordnet ist; wobei das System ferner Folgendes umfasst:
eine Vielzahl von Probenöffnungen (150A, 150B, 150C, 150D), die mit der zumindest einen Aufbaukammer verbunden ist, wobei jede Probenöffnung getrennt mit einer Schutzatmosphäre nahe jeder der Vielzahl von Pulverbett-Zusatzstoffherstellungsvorrichtungen in Verbindung steht; und
ein Echtzeit-Pulverkontaminationserkennungssystem (118), das mit der Vielzahl von Probenöffnungen in Verbindung steht.

6. Zusatzstoffherstellungssystem nach Anspruch 5, ferner umfassend:
eine Herstellungssteuerung (116A, 116B), die angepasst ist, um zumindest eine der Vielzahl von Pulverbett-Zusatzstoffherstellungsvorrichtungen (124A, 124B, 124C, 124D) während eines Aufbauverfahrens zu betreiben, wobei die Herstellungssteuerung angepasst ist, um Raumkoordinaten eines Aufbauorts bereitzustellen, auf den durch die zumindest eine Pulverbett-Zusatzstoffherstellungsvorrichtung abgezielt wird.

7. Zusatzstoffherstellungssystem nach Anspruch 5 oder 6, wobei das Pulverkontaminationserkennungssystem (118A, 118B) Folgendes umfasst:
einen ersten Massenspektralgasdetektor (119A, 119B), der mit zumindest einer der Probenöffnungen (150A, 150B, 150C, 150D) in selektiver Verbindung steht, wobei der erste Massenspektralgasdetektor in der Lage ist, zumindest eines von einer Vielzahl von Gasen zu erkennen, die Pulverkontaminationen in zumindest einer der Vielzahl von Pulverbett-Zusatzstoffherstellungsvorrichtungen (124A, 124B, 124C, 124D) anzeigt; und
ein Analysator-/Steuerungsmodul (120A, 120B), das eine Breitband-Gasanalysatorsoftware beinhaltet, wobei das Pulverkontaminationserkennungssystem (118A, 118B) gegebenenfalls Folgendes umfasst:
einen zweiten Massenspektralgasdetektor (119A, 119B), der mit zumindest einer der Probenöffnungen in selektiver Verbindung steht, wobei der zweite Massenspektralgasdetektor in der Lage ist, zumindest eines von einer Vielzahl von Gasen zu erkennen, die Pulverkontaminationen in zumindest einer der Vielzahl von Pulverbett-Zusatzstoffherstellungsvorrichtungen anzeigt.

8. Zusatzstoffherstellungssystem nach Anspruch 7, wobei das Analysator-/Steuerungsmodul (120A, 120B) angepasst ist, um zumindest ein Pulverkontaminationssignal von dem ersten Massenspektralgasdetektor (119A, 119B) als Reaktion auf das Erfassen von zumindest einem Gas zu empfangen, das Pulverkontaminationen in der zumindest einen Pulverbett-Zusatzstoffherstellungsvorrichtung (124A, 124B, 124C, 124D) anzeigt, wobei das Analysator-/Steuermodul angepasst ist, um das zumindest eine Pulverkontaminationssignal zu verarbeiten, um einen oder mehrere Aspekte von Pulverkontaminationen zu identifizieren, wobei der eine oder die mehreren Aspekte aus einer Gruppe ausgewählt sind, die aus Folgendem besteht: Gaszusammensetzung, Kontaminationszusammensetzung, Kontaminationsspitzengröße und kumulative Kontaminationsgröße, wobei ein möglicher Kontaminationsort und der eine oder die mehreren Aspekte von Pulverkontaminationen kombiniert werden, um eine Reparierbarkeit eines Gegenstands während des Aufbauverfahrens zu beurteilen.

9. Zusatzstoffherstellungssystem nach Anspruch 7, wobei das zumindest eine Gas, das Pulverkontaminationen in der Aufbaukammer (112) anzeigt, aus einer Gruppe ausgewählt ist, die aus Folgendem besteht: Wasserstoff, Stickstoff, kohlenstoffhaltige Gase und Kombinationen davon.

10. Verfahren zur Herstellung eines kompakten Freiform-Gegenstands, wobei das Verfahren Folgendes umfasst:
Betreiben einer ersten Pulverbett-Zusatzstoffherstellungsvorrichtung (24), die in einer Aufbaukammer (12) angeordnet ist,
Erzeugen eines ersten Satzes von Nebenprodukten aus dem Betrieb der ersten Pulverbett-Zusatzstoffherstellungsvorrichtung (24);
Übertragen von zumindest einem des ersten Satzes von Nebenprodukten an ein Pulverbettkontaminationserkennungssystem (18) ;
Betreiben des Pulverbettkontaminationserkennungssystems (18), um Kontaminationen von Pulver zu erkennen, das während des Schritts des Betreibens der ersten Pulverbett-Zusatzstoffherstellungsvorrichtung in der ersten Pulverbett-Zusatzstoffherstellungsvorrichtung verwendet wird;
**gekennzeichnet durch** Aufzeichnen von Raumkoordinaten eines Aufbauorts, auf den durch die zumindest eine Pulverbett-Zusatzstoffherstellungsvorrichtung abgezielt wird, bei Erkennung von Pulverkontaminationen in der Aufbaukammer (12), wobei die aufgezeichneten Raumkoordinaten einem möglichen Kontaminationsort entsprechen.

11. Verfahren nach Anspruch 10, wobei der Schritt des Betreibens des Pulverbettkontaminationserkennungssystems (18) Folgendes umfasst:
Erkennen von zumindest einem Gas, das Pulverkontaminationen in der Aufbaukammer (12) anzeigt;
Erzeugen von zumindest einem resultierenden Pulverkontaminationssignal als Reaktion auf das Erkennen des zumindest einen Gases; und
Verarbeiten des zumindest einen Pulverkontaminationssignals, um einen oder mehrere Aspekte von Pulverkontaminationen in der Aufbaukammer zu identifizieren.

12. Verfahren nach Anspruch 11, wobei:
der eine oder die mehreren identifizierten Aspekte aus einer Gruppe ausgewählt sind, die aus Folgendem besteht: Gaszusammensetzung, Kontaminationszusammensetzung, Kontaminationsspitzengröße und kumulative Kontaminationsgröße; und/oder
das zumindest eine Gas, das Pulverkontaminationen in der Aufbaukammer (12) anzeigt, aus einer Gruppe ausgewählt ist, die aus Folgendem besteht: Wasserstoff, Stickstoff, kohlenstoffhaltige Gase und Kombinationen davon.

13. Verfahren nach Anspruch 10, das ferner Folgendes umfasst:
Beurteilen einer Reparierbarkeit eines Gegenstands während des Aufbauverfahrens auf Grundlage eines möglichen Kontaminationsorts und einem oder mehreren Aspekten von Pulverkontaminationen; und gegebenenfalls
Beenden des Aufbauverfahrens vor dem Abschluss als Reaktion auf eine Echtzeit-Beurteilung einer Unreparierbarkeit.

## Revendications

1. Système de fabrication additive (10), comprenant :
une chambre de construction (12) ;
un dispositif de fabrication additive sur lit de poudre (24) disposé dans la chambre de construction ; et
un système de détection de contamination de poudre (18) en communication avec une atmosphère dans la chambre de construction ; et **caractérisé par**
un dispositif de commande de fabrication (16) conçu pour commander le dispositif de fabrication additive sur lit de poudre pendant un processus de construction, dans lequel, suite à la détection d'une contamination de poudre par le système de détection de contamination de poudre, le dispositif de commande de fabrication est conçu pour fournir des coordonnées spatiales d'un emplacement de construction ciblé par le dispositif de fabrication additive sur lit de poudre, les coordonnées spatiales correspondant à un emplacement potentiel de contamination, dans lequel l'emplacement potentiel de contamination et le ou les aspect(s) de la contamination de poudre sont combinés en temps réel pour évaluer la réparabilité d'un objet en cours de formation dans la chambre de construction au cours du processus de construction.

2. Système de fabrication additive selon la revendication 1, dans lequel la chambre de construction (12) est maintenue sous vide ou dans une atmosphère inerte sous pression partielle.

3. Système de fabrication additive selon la revendication 1 ou 2, dans lequel le système de détection de contamination de poudre comprend :
au moins un détecteur de gaz à spectromètre de masse (19) capable de détecter au moins l'un d'une pluralité de gaz indiquant une contamination de poudre dans la chambre de construction, optionnellement sélectionné dans un groupe constitué de : l'hydrogène, l'azote, des gaz carbonés et des combinaisons de ceux-ci, dans lequel optionnellement l'au moins un détecteur de gaz à spectromètre de masse produit au moins un signal résultant de contamination de poudre en réponse à la détection de l'au moins un gaz indiquant une contamination de poudre dans la chambre de construction (12), dans lequel optionnellement le système de détection de contamination de poudre (18) comprend en outre :
un module d'analyse/de commande (20) comprenant un logiciel d'analyse de gaz à large spectre conçu pour traiter l'au moins un signal de contamination de poudre pour identifier un ou plusieurs aspect(s) de la contamination de poudre dans la chambre de construction, dans lequel l'un ou plusieurs aspect(s) identifié(s) est/sont sélectionné(s) dans un groupe constitué de : une composition de gaz, une composition de contaminant, une amplitude pic de contamination, et une amplitude cumulée de contamination.

4. Système de fabrication additive selon une quelconque revendication précédente, dans lequel l'appareil de fabrication additive sur lit de poudre est sélectionné dans un groupe constitué de :
un appareil de frittage laser direct ;
un appareil de fusion laser directe ;
un appareil de frittage laser sélectif ;
un appareil de fusion laser sélective ;
un appareil LENS de dépôt de métal fondu ;
un appareil de fusion par faisceau d'électrons ; et
un appareil de dépôt de métal direct.

5. Système de fabrication additive selon la revendication 1, dans lequel le dispositif de fabrication additive sur lit de poudre comprend :
une pluralité de dispositifs de fabrication additive sur lit de poudre (124A, 124B, 124C, 124D) disposés dans au moins une chambre de construction (112), ledit système comprenant en outre une pluralité d'orifices d'échantillonnage (150A, 150B, 150C, 150D) reliés à l'au moins une chambre de construction, chaque orifice d'échantillonnage étant séparément en communication avec une atmosphère protectrice à proximité de chacun de la pluralité de dispositifs de fabrication additive sur lit de poudre ; et
un système de détection de contamination de poudre en temps réel (118) en communication avec la pluralité d'orifices d'échantillonnage.

6. Système de fabrication additive selon la revendication 5, comprenant en outre :
un dispositif de commande de fabrication (116A, 116B) conçu pour commander au moins l'un de la pluralité de dispositifs de fabrication additive sur lit de poudre (124A, 124B, 124C, 124D) au cours d'un procédé de construction, le dispositif de commande de fabrication étant conçu pour fournir des coordonnées spatiales d'un emplacement de construction ciblé par l'au moins un dispositif de fabrication additive sur lit de poudre.

7. Système de fabrication additive selon la revendication 5 ou 6, dans lequel le système de détection de contamination (118A, 118B) comprend :
un premier détecteur de gaz à spectromètre de masse (119A, 119B) en communication sélective avec au moins un des orifices d'échantillonnage (150A, 150B, 150C, 150D), le premier détecteur de gaz à spectromètre de masse étant capable de détecter au moins l'un d'une pluralité de gaz indiquant une contamination de poudre dans au moins un de la pluralité de dispositifs de fabrication additive sur lit de poudre (124A, 124B, 124C, 124D) ; et
un module d'analyse/de commande (120A, 120B) comprenant un logiciel d'analyse de gaz à large spectre, dans lequel le système de détection de contamination de poudre (118A, 118B) comprend optionnellement :
un second détecteur de gaz à spectromètre de masse (119A, 119B) en communication sélective avec au moins l'un des orifices d'échantillonnage, le second détecteur de gaz à spectromètre de masse étant capable de détecter au moins l'un d'une pluralité de gaz indiquant une contamination de poudre dans au moins l'un de la pluralité de dispositifs de fabrication additive sur lit de poudre.

8. Système de fabrication additive selon la revendication 7, dans lequel le module d'analyse/de commande (120A, 120B) est conçu pour recevoir au moins un signal de contamination de poudre en provenance du premier détecteur de gaz à spectromètre de masse (119A, 119B) en réponse à la détection de l'au moins un gaz indiquant une contamination de poudre dans l'au moins un dispositif de fabrication additive sur lit de poudre (124A, 124B, 124C, 124D), dans lequel le module d'analyse/de commande est conçu pour traiter l'au moins un signal de contamination de poudre afin d'identifier un ou plusieurs aspect (s) de contamination de poudre, l'un ou les plusieurs aspect (s) étant sélectionné (s) dans un groupe constitué de : une composition de gaz, une composition de contaminant, une amplitude pic de contamination, et une amplitude cumulée de contamination, dans lequel un emplacement potentiel de contamination et le ou les aspect(s) de la contamination de poudre sont combinés pour évaluer la réparabilité d'un objet au cours du processus de construction.

9. Système de fabrication additive selon la revendication 7, dans lequel l'au moins un gaz indiquant une contamination de poudre dans la chambre de construction (112) est sélectionné parmi un groupe constitué de : l'hydrogène, l'azote, des gaz carbonés et des combinaisons de ceux-ci.

10. Procédé de fabrication d'un objet solide de forme non imposée, le procédé comprenant :
la commande d'un premier dispositif de fabrication additive sur lit de poudre (24) disposé dans une chambre de construction (12) ;
la génération d'un premier ensemble de sous-produits à partir du fonctionnement du premier dispositif de fabrication additive sur lit de poudre (24) ;
la transmission d'au moins l'un du premier ensemble de sous-produits à un système de détection de contamination de lit de poudre (18) ;
la commande du système de détection de contamination de lit de poudre (18) pour détecter la contamination de la poudre utilisée dans le premier dispositif de fabrication additive sur lit de poudre au cours de l'étape de commande du premier dispositif de fabrication additive sur lit de poudre ;
**caractérisé par**,
suite à la détection d'une contamination de poudre dans la chambre de construction (12), l'enregistrement de coordonnées spatiales d'un emplacement de construction ciblé par l'au moins un dispositif de fabrication additive sur lit de poudre, les coordonnées spatiales enregistrées correspondant à un emplacement potentiel de contamination.

11. Procédé selon la revendication 10, dans lequel l'étape de commande du système de détection de contamination de lit de poudre (18) comprend :
la détection d'au moins un gaz indiquant une contamination de poudre dans la chambre de construction (12) ;
la production d'au moins un signal de contamination de poudre résultant en réponse à la détection de l'au moins un gaz ; et
le traitement de l'au moins un signal de contamination de poudre pour identifier un ou plusieurs aspect(s) de la contamination de poudre dans la chambre de construction.

12. Procédé selon la revendication 11, dans lequel :
l'un ou les plusieurs aspect(s) identifié(s) est/sont sélectionné(s) dans un groupe constitué de : une composition de gaz, une composition de contaminant, une amplitude pic de contamination, et une amplitude cumulée de contamination ; et/ou
l'au moins un gaz indiquant une contamination de poudre dans la chambre de construction (12) est sélectionné dans un groupe constitué de : l'hydrogène, l'azote, des gaz carbonés et des combinaisons de ceux-ci.

13. Procédé selon la revendication 10, comprenant en outre :
l'évaluation de la réparabilité d'un objet au cours du processus de construction sur la base d'un emplacement potentiel de contamination et d'un ou plusieurs aspects de contamination de poudre ; et, optionnellement,
en réponse à une évaluation en temps réel d'une irréparabilité, l'arrêt du processus de construction avant l'achèvement.
